# EUROPÄISCHE PATENTANMELDUNG

(11) **EP 1 245 345 A1**
(43) Veröffentlichungstag der Anmeldung: **02.10.2002**
(21) Anmeldenummer: 02004603.3
(22) Anmeldetag: 28.02.2002
(51) Int. Cl.: B25J 15/02

(54) **Fluidbetätigter Greifer**

(30) Priorität: 28.03.2001 DE 20105449 U
(71) Anmelder: Festo AG & Co, 73734 Esslingen (DE)
(72) Erfinder: Bellandi, Giuseppe, 25030 Roncadelle (IT); Maffeis, Giuseppe, 25030 Roncadelle (IT)
(74) Vertreter: Abel, Martin, Dipl.-Ing.

(57) **Zusammenfassung**

Es handelt sich um einen fluidbetätigten Greifer, der ein hohlkörperähnlich ausgebildetes einstückiges Greifergehäuse (2) aufweist, das eine Kolbenkammer (5) und eine in Verlängerung der Kolbenkammer (5) angeordnete Lagerungskammer (6) definiert. In einer Schlitzanordnung in der Lagerungskammer (6) sind an bezüglich des Greifergehäuses (2) fixierten Lagerungselementen (36) wenigstens zwei zwischen einer Offenstellung und einer Schließstellung relativ zueinander bewegliche Greifbackenträger (34a, 34b) gelagert, deren Bewegung in wenigstens einer Richtung durch Fluidbeaufschlagung eines in der Kolbenkammer (5) verstellbar geführten Kolbens (24) hervorgerufen wird. Die Schlitzanordnung (12) ist unmittelbar vom Greifergehäuse (2) definiert. Die Lagerungselemente (36) sind unmittelbar am Greifergehäuse (2) gehalten.

## Beschreibung

Die Erfindung betrifft einen fluidbetätigten Greifer, mit einem hohlkörperähnlich ausgebildeten einstückigen Greifergehäuse, das eine Kolbenkammer und eine in Verlängerung der Kolbenkammer angeordnete Lagerungskammer definiert, wobei in einer aus einem oder mehreren Schlitzen bestehenden Schlitzanordnung in der Lagerungskammer an bezüglich des Greifergehäuses fixierten Lagerungselementen wenigstens zwei zwischen einer Offenstellung und einer Schließstellung relativ zueinander bewegliche Greifbackenträger gelagert sind, deren Bewegung in wenigstens einer Richtung durch Fluidbeaufschlagung eines in der Kolbenkammer verstellbar geführten Kolbens hervorgerufen wird.

Ein derartiger Greifer geht aus der EP 0950475 A2 hervor. Dessen hohlkörperähnlich ausgebildetes Greifergehäuse definiert eine Kolbenkammer, die einen durch Fluidbeaufschlagung verlagerbaren Kolben enthält, der in die Lagerungskammer hineinragt. In der Lagerungskammer arbeitet der Kolben mit zwei Greifbackenträgern zusammen, um diese nach Wahl in einer Schließstellung oder einer Offenstellung zu positionieren, so dass ein handzuhabender Gegenstand nach Bedarf gehalten oder losgelassen werden kann. Der bekannte Greifer ist ein sogenannter Winkelgreifer mit zwei jeweils um eine Drehachse verschwenkbaren Greifbackenträgern, welche innerhalb der Lagerungskammer in einer Schlitzanordnung aufgenommen sind. Die Schlitzanordnung ist Bestandteil eines patronenartigen Lagerkörpers, der in die Lagerungskammer eingesetzt ist und der gleichzeitig die Schwenkachsen für die Greifbackenträger definierende stiftartige Lagerungselemente trägt.

Die bekannte Greiferkonstruktion gelangt an ihre Grenzen, wenn besonders kleine Abmessungen gefordert werden. Es ist daher die Aufgabe der vorliegenden Erfindung, einen fluidbetätigten Greifer der eingangs genannten Art zu schaffen, der bei einfacher Herstellbarkeit über kompakte Abmessungen verfügt.

Zur Lösung dieser Aufgabe ist vorgesehen, dass die Schlitzanordnung unmittelbar vom Greifergehäuse definiert ist und die Lagerungselemente unmittelbar am Greifergehäuse gehalten sind.

Auf diese Weise dient das Greifergehäuse sowohl zur Bereitstellung der Kolbenkammer als auch unmittelbar zur Bereitstellung der Lagerstelle für die beweglichen Greifbackenträger. Die Lagerungselemente sind unmittelbar am Greifergehäuse gehalten, so dass ein beim Stand der Technik eventuell auftretendes Lagerspiel, bedingt durch den dort zusätzlich vorhandenen Lagerkörper, minimiert werden kann. Des Weiteren können durch die unmittelbar gehäuseseitige Fixierung der Lagerungselemente die Abmessungen des Greifers sehr stark reduziert werden, was auch miniaturisierte Bauformen problemlos ermöglicht.

Vorteilhafte Weiterbildungen der Erfindung gehen aus den Unteransprüchen hervor.

Die Greifbackenträger werden zweckmäßigerweise unmittelbar vom Kolben beaufschlagt, so dass eine direkte Kraftübertragung ohne zusätzliche Betätigungselemente und somit bei geringem Platzbedarf vorliegt.

Der Greifer kann beispielsweise als Winkelgreifer ausgebildet sein. In einer besonders vorteilhaften Ausführungsform ist er jedoch als sogenannter Parallelgreifer realisiert und verfügt über zwei sich gegenüberliegende, rechtwinkelig zur Bewegungsrichtung des Kolbens verstellbare Greifbackenträger.

Die Lagerungselemente für die Greifbackenträger sind vorzugsweise stiftartig ausgebildet und ermöglichen eine Verschiebeführung der Greifbackenträger vergleichbar einer Schienenführung.

Bei einer besonders vorteilhaften Ausführungsform besitzt die Lagerungskammer eine in koaxialer Verlängerung der Kolbenkammer angeordnete zentrale Montageausnehmung, in die die Schlitzanordnung seitlich einmündet und deren Querschnitt zumindest dem Querschnitt der Kolbenkammer entspricht. Auf diese Weise besteht die Möglichkeit, beim Zusammenbau des Greifers den Kolben durch die Montageausnehmung hindurch in die Kolbenkammer einzusetzen, auch wenn die Schlitze der Schlitzanordnung über eine nur geringe Breite verfügen. Auch bei sehr kleinen Abmessungen ist somit eine bequeme Montage des Kolbens gewährleistet.

Zur Abdeckung der Öffnung der Montageausnehmung kann eine Abdeckung vorgesehen sein, die lösbar auf dem die Lagerungskammer definierenden Lagerungsabschnitt des Greifergehäuses sitzt.

Die den Kolben enthaltende Betätigungseinrichtung kann nach Art eines einfachwirkenden Arbeitszylinders ausgebildet werden, wenn eine die Greifbackenträger in die Offenstellung oder in die Schließstellung vorspannende Rückstellfedereinrichtung vorhanden ist. Je nach Anordnung der Rückstellfedereinrichtung kann ein Greifer vom Typ "Normalerweise geschlossen" oder "Normalerweise geöffnet" realisiert werden.

Das Greifergehäuse kann nach Bedarf mit verschiedenartigen Befestigungsmitteln ausgestattet sein, die eine sich am Einsatzzweck orientierende Befestigung des Greifers gestatten.

Nachfolgend wird die Erfindung anhand der beiliegenden Zeichnung näher erläutert. In dieser zeigen:
- Fig. 1: eine erste Bauform des erfindungsgemäßen Greifers in perspektivischer Darstellung,
- Fig. 2: den Greifer aus Fig. 1 in einer teilweise aufgebrochenen Darstellungsweise,
- Fig. 3: den Greifer aus Fig. 1 und 2 im Längsschnitt gemäß Schnittlinie III-III aus Fig. 2,
- Fig. 4: einen weiteren Längsschnitt durch den Greifer aus Fig. 1 und 2 mit im Vergleich zur Fig. 3 um 90° verdrehter Schnittebene gemäß Schnittlinie IV-IV,
- Fig. 5: einen Querschnitt durch den Greifer gemäß Fig. 1 und 2 gemäß Schnittlinie V-V aus Fig. 2 und
- Fig. 6: eine weitere Ausführungsform des erfindungsgemäßen Greifers in einer der Fig. 4 entsprechenden Längsschnittdarstellung, wobei jedoch im Vergleich zu dem in der Bauart "Normalerweise geöffnet" ausgeführten Greifertyp der Fig. 1 bis 5 ein Greifer des Typs "Normalerweise geschlossen" gezeigt ist.

Der in seiner Gesamtheit mit Bezugsziffer 1 bezeichnete fluidbetätigte Greifer verfügt als Kernbestandteil über ein hohlkörperartig ausgebildetes einstückiges Greifergehäuse 2, das alle für den Antrieb relevanten Komponenten aufnimmt.

Das Greifergehäuse 2 ist in einen Antriebsabschnitt 3 und einen Lagerungsabschnitt 4 unterteilt, die einstückig miteinander ausgebildet sind. Der Antriebsabschnitt 3 beinhaltet eine längliche, vorzugsweise kreiszylindrisch gestaltete Kolbenkammer 5, und der Lagerungsabschnitt 4 begrenzt eine sich an die Kolbenkammer 5 anschließende Lagerungskammer 6.

Im Bereich des Antriebsabschnittes 3 hat das Greifergehäuse 2 beispielsweise eine kreiszylindrische Außengestalt. Der Lagerungsabschnitt 4 hingegen hat, im Querschnitt gesehen, eine längliche Außenkontur, so dass das Greifergehäuse 2 insgesamt eine T-förmige Gestalt einnimmt.

Die Lagerungskammer 6 setzt sich zusammen aus einer zentralen Montageausnehmung 7, die in koaxialer Verlängerung der Kolbenkammer 5 angeordnet ist und in diese unmittelbar übergeht. Die Montageausnehmung 7 ist auf der der Kolbenkammer 5 entgegengesetzten Axialseite mit einer Montageöffnung 8 versehen. Als weiterer Bestandteil der Lagerungskammer 6 ist eine Schlitzanordnung 12 vorgesehen, die eine Mehrzahl von Schlitzen 13a, 13b umfasst, beim Ausführungsbeispiel zwei Stück.

Die Schlitze 13a, 13b durchsetzen den Lagerungsabschnitt 4 mit einer gemeinsamen Schlitzebene 14, welche die Längsachse 15 der Kolbenkammer 5 beinhaltet. Die Schlitze 13a, 13b münden an einander diametral gegenüberliegenden Stellen mit inneren Schlitzöffnungen 16a, 16b umfangsseitig in die Montageausnehmung 7 ein. Mit entgegengesetzten äußeren Schlitzöffnungen 17a, 17b münden die Schlitze 13a, 13b außen an der Seitenfläche des Greifergehäuses 2 aus. Schließlich verfügt jeder Schlitz 13a, 13b noch über eine vordere Schlitzöffnung, die zur gleichen Seite orientiert ist wie die Montageöffnung 8 und mit dieser insbesondere in einer gemeinsamen Ebene liegt.

Die Montageöffnung 8 hat zweckmäßigerweise einen dem Querschnitt der Kolbenkammer 5 entsprechenden Querschnitt und ist beim Ausführungsbeispiel kreiszylindrisch gestaltet. Jedenfalls ist der Querschnitt der Montageausnehmung 7 nicht kleiner als derjenige der Kolbenkammer 5. Die zwischen den sich gegenüberliegenden Schlitzflanken 22, 23; 22a, 23a gemessene Schlitzbreite der Schlitze 13a, 13b ist zweckmäßigerweise geringer als der Durchmesser der Montageausnehmung 7.

Im Innern der Kolbenkammer 5 befindet sich ein in Richtung der Längsachse 15 verstellbar geführter Kolben 24, wobei die Bewegungsrichtung dieses Kolbens 24 in der Zeichnung durch Doppelpfeil 25 verdeutlicht ist.

Auf der der Lagerungskammer 6 entgegengesetzten Stirnseite ist die Kolbenkammer 5 durch eine zweckmäßigerweise einen einstückigen Bestandteil des Greifergehäuses 2 bildende Abschlusswand 26 verschlossen. Der axial zwischen dem Kolben 24 und der Abschlusswand 26 liegende Bereich der Kolbenkammer 5 bildet einen Beaufschlagungsraum 28, in den durch eine die Abschlusswand 26 durchsetzende Steueröffnung 27 hindurch ein Betätigungsfluid einspeisbar ist, um den Kolben 24 zu einer Bewegung in Richtung der Lagerungskammer 6 zu veranlassen. Alternativ kann über die Steueröffnung 27 Betätigungsfluid aus dem Beaufschlagungsraum 28 abgeführt werden, um eine entgegengesetzte Rückstellbewegung des Kolbens 24 zu ermöglichen. Die Abdichtung des Beaufschlagungsraumes 28 zur Lagerungskammer 6 hin wird durch eine ringförmige Dichtung 32 bewirkt, die am Umfang des Kolbens 24 fixiert ist und mit der Innenfläche der Kolbenkammer 5 dynamisch dichtend zusammenarbeitet. Die Steueröffnung 27 ist mit geeigneten Befestigungsmitteln 33, hier: ein Innengewinde, versehen, die den Anschluss einer der Zufuhr und Abfuhr des Betätigungsfluides dienenden Fluidleitung ermöglichen.

Innerhalb der Lagerungskammer 6 sind, in der Schlitzanordnung 12, zwei zwischen einer Offenstellung und einer Schließstellung relativ zueinander bewegliche Greifbackenträger 34a, 34b gelagert. Die durch Doppelpfeil angedeutete Bewegungsrichtung 35 der Greifbackenträger 34a, 34b verläuft stets gegensinnig und dabei rechtwinkelig zur Bewegungsrichtung 25 des Kolbens 24. Die Verschiebelagerung bezüglich des Greifergehäuses 2 der Greifbackenträger 34a, 34b wird durch unmittelbar am Greifergehäuse 2 gehaltene Lagerungselemente 36 bewirkt, an denen die Greifbackenträger 34a, 34b entlanglaufen können. Die die Greifbackenträger 34a, 34b größtenteils aufnehmende Schlitzanordnung 12 ist, wie oben schon erwähnt, unmittelbar vom Greifergehäuse 2 definiert und wird von den einen einstückigen Bestandteil des Greifergehäuses 2 bildenden Schlitzflanken 22, 23; 22a, 23a begrenzt.

Die beiden Greifbackenträger 34a, 34b sind jeweils mit Befestigungsmitteln 37, beispielsweise je mindestens eine Gewindebohrung, ausgestattet, die eine lösbare Befestigung je einer Greifbacke gestatten. Die Ausgestaltung der verwendeten Greifbacken orientiert sich am Einsatzzweck des Greifers 1.

Bedingt durch die Lagerung in den sich bezüglich der Montageausnehmung 7 diametral gegenüberliegenden Schlitzen 13a, 13b, werden die Greifbackenträger 34a, 34b bei der Betätigung in einer gemeinsamen Ebene verlagert, welche mit der oben erläuterten Schlitzebene 14 zusammenfällt.

Prinzipiell könnten die Lagerungselemente 36 einstückiger Bestandteil des Greifergehäuses 2 sein. Beim Ausführungsbeispiel ist jedoch eine separate Bauform gewählt, wobei die Lagerungselemente 36 stiftartig ausgebildet sind und derart ausgerichtet sind, dass ihre Längsrichtung mit der gewünschten Bewegungsrichtung 35 der Greifbackenträger 34a, 34b zusammenfällt.

Beim Ausführungsbeispiel genügen zwei der stiftartigen Lagerungselemente 36 zur gleichzeitigen Verschiebelagerung beider Greifbackenträger 34a, 34b. Diese beiden Lagerungselemente 36 befinden sich beidseits des Paares von Greifbackenträgern 34a, 34b zwischen diesen und den an der entsprechenden Seite liegenden Schlitzflanken 22, 22a; 23, 23a. Die beiden auf der gleichen Längsseite der Schlitzanordnung 12 liegenden Schlitzflanken 22, 22a; 23, 23a sind mit miteinander fluchtenden nutartigen Vertiefungen 38 versehen, in die das betreffende Lagerungselement 36 eingelegt ist. Der über die nutartigen Vertiefungen 38 vorstehende Abschnitt der Lagerungselemente 36 taucht in eine Führungsnut 42 an der Seitenfläche des zugeordneten Greifbackenträgers 34a, 34b ein, der somit relativ zu den Lagerungselementen 36 in deren Längsrichtung verschiebbar ist.

Auf diese Weise kann durch lediglich zwei Zylinderstifte eine sehr einfache Gleitführung der Greifbackenträger 34a, 34b erzielt werden. Die notwendige Grundschmierung kann bei der Montage durchgeführt werden, so dass ein Nachschmieren während der garantierten Lebensdauerkennwerte nicht notwendig wird.

Zur Einstellung des Gleitspiels kann eine die Schlitzanordnung 12 quer durchsetzende Schraubenanordnung 43 vorgesehen sein, die sich gleichzeitig an beiden die Schlitzanordnung 12 längsseits begrenzenden Gehäuseabschnitten abstützt. Beim Ausführungsbeispiel beinhaltet die Schraubenanordnung 43 zwei Spannschrauben, die die Schlitzanordnung 12 jeweils im Bereich eines der Schlitze 13a, 13b durchqueren, wobei sie sich am einen Gehäuseabschnitt mit ihrem Kopf abstützen und in den anderen Gehäuseabschnitt eingeschraubt sind. Die Gehäuseabschnitte können somit durch Betätigung der Schraubenanordnung 43 unter Verringerung oder Vergrößerung der Schlitzbreite zueinandergezogen oder voneinander entfernt werden.

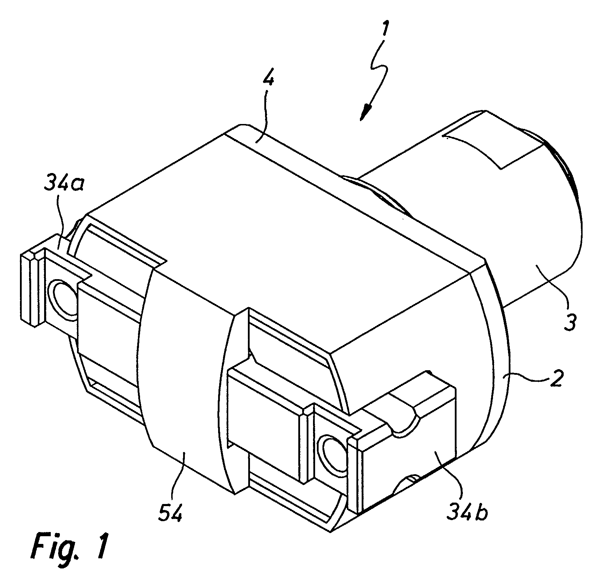

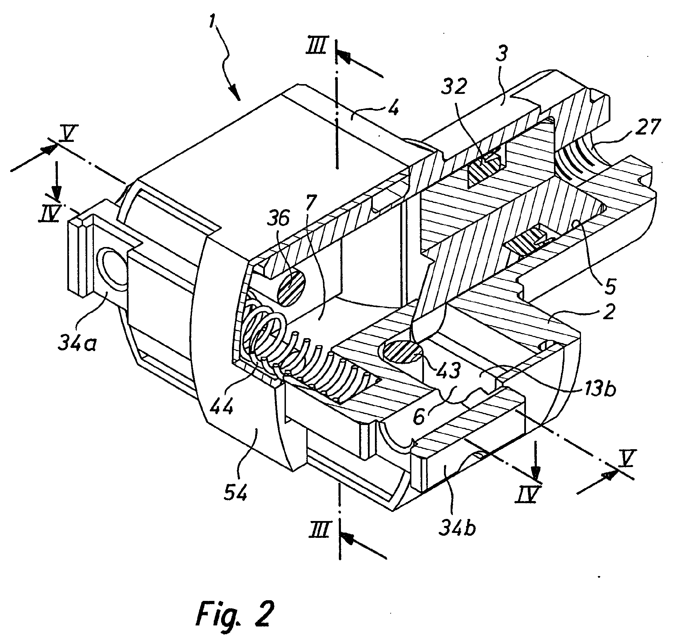

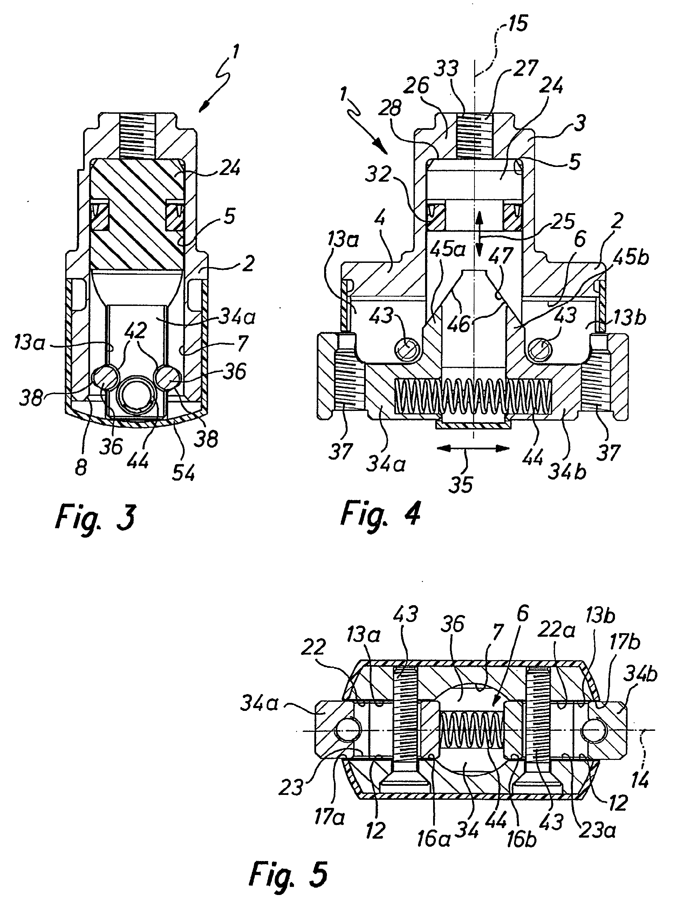

Der Greifer gemäß Fig. 1 bis 5 ist vom Typ "Normalerweise geöffnet". Eine sich zwischen den beiden Greifbackenträgern 34a, 34b erstreckende Rückstellfedereinrichtung 44 drückt die Greifbackenträger 34a, 34b auseinander in die aus der Zeichnung ersichtliche Offenstellung. Zum Verlagern in die Schließstellung wird der Kolben 24 im Beaufschlagungsraum 28 mit Betätigungsfluid beaufschlagt, so dass er sich axial in Richtung zur Lagerungskammer 6 bewegt, wobei er gleichzeitig mit Beaufschlagungspartien 45a, 45b beider Greifbackenträger 34a, 34b kooperiert und letztere entgegen der Kraft der Rückstellfedereinrichtung 44 einander annähert, bis die Schließstellung erreicht ist.

Zum Verlagern in die Offenstellung genügt es, das Betätigungsfluid aus dem Beaufschlagungsraum 28 abzulassen, so dass die Rückstellfedereinrichtung 44 die Greifbackenträger 34a, 34b wieder voneinander entfernt und dabei durch das Zusammenwirken der Beaufschlagungspartien 45a, 45b mit dem Kolben 24 letzteren in die Ausgangsposition zurückdrückt.

Zur Beaufschlagung der Greifbackenträger 34a, 34b ist der Kolben 24 an seiner Vorderseite mit zwei schräg zu seiner Bewegungsrichtung 25 verlaufenden Betätigungsflächen 46 ausgestattet, die mit komplementären Flächen der jeweiligen Beaufschlagungspartie 45a, 45b zusammenarbeiten. Beim Ausführungsbeispiel gemäß Fig. 1 bis 5 befinden sich die Betätigungsflächen 46 an den einander zugewandten Innenseiten einer stirnseitigen Aussparung 47 des Kolbens 24 und laufen, in Richtung zu den Greifbackenträgern 34a, 34b, auseinander.

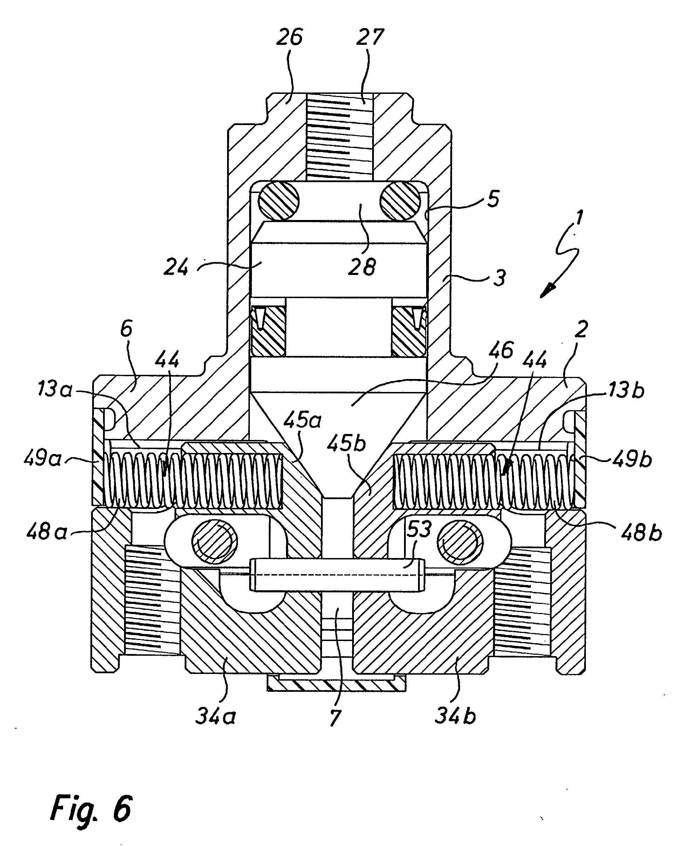

Eine hinsichtlich der Betätigungsart abweichende Bauform ist in Fig. 6 gezeigt, wobei im übrigen ein vergleichbarer Aufbau vorliegt, so dass auf eine getrennte Erläuterung verzichtet werden kann. Einander entsprechende Komponenten sind mit identischen Bezugszeichen versehen.

Der Greifer gemäß Fig. 6 ist vom Typ "Normalerweise geschlossen", wobei wiederum eine Rückstellfedereinrichtung 44 vorgesehen ist, die nun aber die Greifbackenträger 34a, 34b ständig in die einander angenäherte Schließstellung vorspannt. Die Rückstellfedereinrichtung 44 verfügt hier nicht über eine einzige Federeinheit wie beim Ausführungsbeispiel gemäß Fig. 1 bis 5, sondern über zwei Federeinheiten 48a, 48b, die sich jeweils zwischen einem der Greifbackenträger 34a, 34b und einer gehäusefest fixierten Stützwand 49a, 49b abstützen.

Die Grundstellung wird also wie beim Ausführungsbeispiel gemäß Fig. 1 bis 5 durch die Rückstellfedereinrichtung 44 vorgegeben, so dass der Antriebsabschnitt 3 zusammen mit dem Kolben 24 lediglich nach Art eines sogenannten einfachwirkenden Arbeitszylinders zu arbeiten hat und keine durch Fluidkraft hervorzurufende Rückstellung vorgesehen werden muss.

Der Aufbau der Betätigungseinrichtung wird auf diese Weise stark vereinfacht.

Da jedoch verglichen mit der Bauform gemäß Fig. 1 bis 5 eine umgekehrte Betätigungsrichtung des Kolbens 24 vorhanden ist, sind die an dessen Stirnseite vorgesehenen Betätigungsflächen 46 als Außenflächen ausgebildet, welche sich zum freien Ende hin verjüngen, so dass sie die Greifbackenträger 34a, 34b auseinanderdrücken, wenn sie zwischen diese einfahren. Die Betätigungsflächen 46 können von mehreren Einzelflächen oder als einheitliche Fläche ausgeführt sein, wobei das Ausführungsbeispiel eine konische Gestaltung vorsieht.

Die Verschiebeführung der Greifbackenträger 34a, 34b ist die gleiche wie beim Ausführungsbeispiel gemäß Fig. 1 bis 5. Ergänzend ist jedoch gezeigt, dass bei Bedarf ein zusätzlicher Führungsstift 53 vorhanden sein kann, der sich zwischen den beiden Greifbackenträgern 34a, 34b erstreckt und gleichzeitig in diese eingreift. In der Regel wird man auf diesen Führungsstift 53 jedoch verzichten können.

Zwar könnte vorgesehen sein, dass der Kolben 24 unter Zwischenschaltung eines geeigneten Kraftübertragungsgliedes nur mittelbar auf die Greifbackenträger 34a, 34b einwirkt. Die unmittelbare Beaufschlagung der beiden Ausführungsbeispiele hat jedoch den Vorteil einer reduzierten Anzahl von Bauteilen und einer geringeren Spielbehaftung.

Bei allen Ausführungsbeispielen ist vorgesehen, dass der Kolben 24 bereits im unbetätigten Zustand ein Stück weit aus der Kolbenkammer 5 heraus- und in die Lagerungskammer 6 hineinragt, wo er mit den Greifbackenträgern 34a, 34b in ständigem Kontakt steht.

Das Greifergehäuse 2 kann auf Grund seiner einstückigen Bauweise sehr einfach und kostengünstig hergestellt werden. Auch lassen sich dadurch problemlos sehr kleine Abmessungen realisieren. Um gleichwohl eine sehr einfache Montage und bei Bedarf auch Demontage des Kolbens 24 zu ermöglichen, ist die oben erläuterte Montageausnehmung 7 vorgesehen, durch die hindurch der Kolben 24 von der der Abschlusswand 26 entgegengesetzten Seite her, durch die Lagerungskammer 6 hindurch, in die Kolbenkammer 5 eingesteckt werden kann. Das Einstecken geschieht vor der nachfolgenden Montage der Lagerungselemente 36, der Greifbackenträger 34a, 34b und der beim Ausführungsbeispiel der Fig. 1 bis 5 die Montageausnehmung 7 durchquerenden Rückstellfedereinrichtung 44.

Man hat also die Möglichkeit, die Breite der Schlitzanordnung 12 den Anforderungen entsprechend sehr gering auszuführen, um entsprechend schmale Greifbackenträger 34a, 34b aufnehmen zu können, ohne dass dadurch die Montage des Kolbens 24 behindert würde.

Durch die Greifbackenträger 34a, 34b beziehungsweise deren mit dem Kolben 24 unmittelbar kooperierende Beaufschlagungspartien 45a, 45b wird der Kolben 24 in der Kolbenkammer 5 gehalten, so dass es keiner zusätzlichen Sicherungsmittel bedarf.

Die Greifbackenträger 34a, 34b ragen beim Ausführungsbeispiel ein Stück weit über die vorderen Schlitzöffnungen hinaus, wobei die vom Kolben 24 abgewandte Fläche der Greifbackenträger 34a, 34b zur Montage der nicht dargestellten Greifbacken vorgesehen ist.

Entsprechend der eingenommenen Stellung ragen die Greifbackenträger 34a, 34b des Weiteren mehr oder weniger weit über die seitlich platzierten äußeren Schlitzöffnungen 17a, 17b hinaus.

Die von den Greifbackenträgern 34a, 34b nicht belegten Abschnitte der Schlitzöffnungen der Schlitzanordnung 12 sowie die Montageöffnung 8 sind durch eine kappenartige Abdeckung 54 verschlossen, die lösbar außen auf den Lagerungsabschnitt 4 aufgesetzt ist. Die Befestigung erfolgt insbesondere im Rahmen einer Rastverbindung. Während das Greifergehäuse 2 insbesondere aus Metall, beispielsweise aus Aluminiummaterial, besteht, handelt es sich bei der Abdeckung 54 vorzugsweise um ein Kunststoffteil.

Im Falle der Bauform gemäß Fig. 6 bildet die Abdeckung 54 gleichzeitig die Stützwände 49a, 49b für die Rückstellfedereinrichtung 44.

Durch die aufgesetzte Abdeckung 54 werden zweckmäßigerweise auch die stiftartigen Lagerungselemente 36 stirnseitig abgedeckt, wobei die Abdeckung 54 gleichzeitig auch zur Lagefixierung dienen kann.

Einige wesentliche Merkmale der beispielhaft beschriebenen fluidbetätigten Greifer seien nachstehend nochmals wiederholt.

Die insbesondere als Parallelgreifer ausgebildeten Greifer enthalten ein Greifergehäuse, in das eine Betätigungseinrichtung in Gestalt eines einfachwirkenden Arbeitszylinders integriert ist. Die Kraftübertragung von der Linearbewegung des Kolbens 24 in die Bewegung der Greifbackenträger 34a, 34b erfolgt über eine oder mehrere am Kolben 24 angebrachte Schrägflächen, insbesondere schiefe Ebenen, welche auf die im Greifergehäuse 2 über eingelegte stiftartige Lagerungselemente 36 verschiebbar gelagerten Greifbackenträger 34a, 34b unmittelbar einwirken. Je nach Ausführungsvariante (drucklos offen oder drucklos geschlossen) wird ein Kolben 24 verwendet, der bei Fluidbeaufschlagung die Greifbackenträger 34a, 34b entweder ausfährt oder zusammendrückt. Die jeweils entgegengesetzte Bewegung wird über eine vorgespannte Rückstellfedereinrichtung 44 erzielt, die beim Ausführungsbeispiel gemäß Fig. 1 bis 5 aus einer zwischen den beiden Greifbackenträgern 34a, 34b wirkenden Federeinheit und im Falle der Fig. 6 aus zwei zwischen jeweils einem Greifbackenträger 34a, 34b und einer Stützwand 49a, 49b wirkenden Federeinheiten 48a, 48b besteht.

Zur Gleitführung der Greifbackenträger sind im Greifergehäuse 2 zwei zylindrisch gestaltete stiftförmige Lagerungselemente 36 eingelegt. Das Bewegungsspiel der Greifbackenträger kann über die Schraubenanordnung 43 durch entsprechendes Verspannen der die Schlitzanordnung 12 begrenzenden Gehäuseabschnitte des Greifergehäuses 2 voreingestellt bzw. nahezu eliminiert werden. Die Hubbegrenzung der Greifbackenträger 34a, 34b kann über einen Festanschlag in der Kolbenendlage stattfinden. Eine berührungslose Endlagenabfrage ist zwar nicht vorgesehen, kann bei Bedarf jedoch installiert werden. Die Möglichkeit einer Greifkrafteinstellung und -regulierung ist über den Betriebsdruck des Betätigungsfluides gegeben, da eine konstante Übersetzung vorliegt.

Die Geschwindigkeitsreduzierung des Öffnungs- und Schließvorganges kann über fixe Drosselbohrungen erfolgen.

Zur Befestigung der Greifer 1 können unterschiedliche Bauausführungen mit voneinander abweichenden Befestigungsvarianten vorgesehen werden. Beim Ausführungsbeispiel findet sich im Bereich des Antriebsabschnittes des Greifergehäuses 2 eine Passung am Außendurchmesser mit einer Abflachung zur Klemmung und Verdrehsicherung. Möglich ist ferner eine Direktbefestigung von hinten oder von vorne mittels Schrauben. Hier können zur Zentrierung zwei Passstifte verwendet werden. Des Weiteren besteht die Möglichkeit, eine Befestigung durch zwei Befestigungsschrauben und Zentrierhülsen mit integriertem Hubausgleich vorzusehen.

## Patentansprüche

1. Fluidbetätigter Greifer, mit einem hohlkörperähnlich ausgebildeten einstückigen Greifergehäuse (2), das eine Kolbenkammer (5) und eine in Verlängerung der Kolbenkammer (5) angeordnete Lagerungskammer (6) definiert, wobei in einer aus einem oder mehreren Schlitzen (13a, 13b) bestehenden Schlitzanordnung (12) in der Lagerungskammer (6) an bezüglich des Greifergehäuses (2) fixierten Lagerungselementen (36) wenigstens zwei zwischen einer Offenstellung und einer Schließstellung relativ zueinander bewegliche Greifbackenträger (34a, 34b) gelagert sind, deren Bewegung in wenigstens einer Richtung durch Fluidbeaufschlagung eines in der Kolbenkammer (5) verstellbar geführten Kolbens (24) hervorgerufen wird, **dadurch gekennzeichnet, dass** die Schlitzanordnung (12) unmittelbar vom Greifergehäuse (2) definiert ist und die Lagerungselemente (36) unmittelbar am Greifergehäuse (2) gehalten sind.

2. Greifer nach Anspruch 1, **dadurch gekennzeichnet, dass** die Greifbackenträger (34a, 34b) vom Kolben (24) unmittelbar beaufschlagt werden.

3. Greifer nach Anspruch 1 oder 2, **dadurch gekennzeichnet, dass** der Kolben (24) aus der Kolbenkammer (5) heraus- und in die Lagerungskammer (6) hineinragt.

4. Greifer nach Anspruch 1 oder 2, **gekennzeichnet durch** eine Ausgestaltung als Parallelgreifer mit zwei rechtwinkelig zur Bewegungsrichtung des Kolbens (24) in einer gemeinsamen Ebene verstellbaren Greifbackenträgern (34a, 34b).

5. Greifer nach einem der Ansprüche 1 bis 4, **dadurch gekennzeichnet, dass** die Lagerungselemente (36) stiftartig ausgebildet sind und zur Verschiebeführung der Greifbackenträger (34a, 34b) vorgesehen sind.

6. Greifer nach Anspruch 5, **dadurch gekennzeichnet, dass** zwei in einer gemeinsamen Ebene rechtwinkelig zur Bewegungsrichtung (25) des Kolbens (24) verstellbare Greifbackenträger (34a, 34b) vorgesehen sind, wobei zu beiden Seiten dieses Paares von Greifbackenträgern (34a, 34b) jeweils mindestens ein stiftartiges Lagerungselement (36) angeordnet ist, das zum einen in eine nutartige Vertiefung der betreffenden Schlitzflanke (22, 22a; 23, 23a) eingelegt ist und zum andern in eine Führungsnut (42) des jeweiligen Greifbackenträgers (34a, 34b) eingreift.

7. Greifer nach Anspruch 6, **dadurch gekennzeichnet, dass** zur Verschiebelagerung des Paares von Greifbackenträgern (34a, 34b) lediglich zwei beidseits der Greifbackenträger (34a, 34b) angeordnete stiftartige Lagerungselemente (36) vorgesehen sind, wobei jedes Lagerungselement (36) zur gleichzeitigen Führung beider Greifbackenträger (34a, 34b) vorgesehen ist.

8. Greifer nach einem der Ansprüche 1 bis 7, **dadurch gekennzeichnet, dass** die Lagerungskammer (6) eine in koaxialer Verlängerung der Kolbenkammer (5) angeordnete zentrale Montageausnehmung (7) besitzt, in die die Schlitzanordnung (12) seitlich einmündet und deren Querschnitt so ausgeführt ist, dass durch sie hindurch das Einführen des Kolbens (24) in die Kolbenkammer (5) möglich ist.

9. Greifer nach Anspruch 8, **dadurch gekennzeichnet, dass** die Montageausnehmung (7) und die Kolbenkammer (5) den gleichen Querschnitt haben und insbesondere kreisförmig konturiert sind.

10. Greifer nach Anspruch 8 oder 9, **gekennzeichnet durch** eine lösbar auf dem die Lagerungskammer (6) definierenden Lagerungsabschnitt (4) des Greifergehäuses (2) sitzende Abdeckung (54), die die Montageausnehmung (7) an der der Kolbenkammer (5) entgegengesetzten offenen Seite verschließt.

11. Greifer nach einem der Ansprüche 1 bis 10, **dadurch gekennzeichnet, dass** eine die Greifbackenträger (34a, 34b) in die Offenstellung oder die Schließstellung vorspannende Rückstellfedereinrichtung (44) vorhanden ist.

12. Greifer nach einem der Ansprüche 1 bis 11, **dadurch gekennzeichnet, dass** der Kolben (24) mit einer oder mehreren, schräg zu seiner Bewegungsrichtung (25) verlaufenden Betätigungsflächen (46) mit den Greifbackenträgern (34a, 34b) zusammenarbeitet.

13. Greifer nach einem der Ansprüche 1 bis 12, **gekennzeichnet durch** eine die Schlitzanordnung (12) durchsetzende Schraubenanordnung (43) zur variablen Einstellung der Schlitzbreite.

14. Greifer nach einem der Ansprüche 1 bis 13, **dadurch gekennzeichnet, dass** die Greifbackenträger (34a, 34b) zur lösbaren Befestigung von Greifbacken ausgebildet sind.
